# EUROPÄISCHE PATENTANMELDUNG

(11) **EP 2 090 608 A2**
(43) Veröffentlichungstag der Anmeldung: **19.08.2009**
(21) Anmeldenummer: 09000705.5
(22) Anmeldetag: 20.01.2009
(51) Int. Cl.: C08G 73/00

(54) **Verfahren zur Herstellung eines Polyoxadiazol-Polymers**

(30) Priorität: 13.02.2008 DE 102008009068
(71) Anmelder: GKSS-Forschungszentrum Geesthacht GmbH, 21502 Geesthacht (DE)
(72) Erfinder: De Figueredo Gomes, Dominique, 21641 Apensen (DE); Loos, Marcio Rodrigo, 21502 Geesthacht (DE)
(74) Vertreter: Seemann, Ralph

(57) **Zusammenfassung**

Die Erfindung betrifft ein Verfahren zur Herstellung eines Polyoxadiazol-Polymers in einer einstufigen Polykondensationsreaktion eines Hydrazinsulfatsalzes mit Dicarboxylsäuren oder deren Derivaten in Polyphosphorsäure. Die Erfindung betrifft weiter ein entsprechendes Polyoxadiazol-Polymer sowie Verwendungen eines entsprechenden Polyoxadiazol-Polymers.

Das erfindungsgemäße Verfahren zeichnet sich dadurch aus, dass folgende Schritte durchgeführt werden:
- Erhitzen der Polyphosphorsäure auf eine Temperatur von wenigstens 160°C,
- Herstellen einer Lösung durch Vermischen des Hydrazinsulfatsalzes mit einer oder mehreren Dicarboxylsäuren oder deren Derivaten in der erhitzten Polyphosphorsäure,
- Erhitzen der Lösung unter einer Inertgas-Atmosphäre,
- Ausfällen des Polymers in einer Basislösung.

## Beschreibung

Die Erfindung betrifft ein Verfahren zur Herstellung eines Polyoxadiazol-Polymers in einer einstufigen Polykondensationsreaktion eines Hydrazinsulfatsalzes mit Dicarboxylsäuren oder deren Derivaten in Polyphosphorsäure. Die Erfindung betrifft weiter ein entsprechendes Polyoxadiazol-Polymer sowie Verwendungen eines entsprechenden Polyoxadiazol-Polymers.

Polyoxadiazole (im Folgenden mit "POD" abgekürzt) weisen neben hoher chemischer und thermischer Stabilität hohe Glasübergangstemperaturen auf. Sie können direkt verarbeitet, z. B. zu Fasern versponnen werden oder es können Beschichtungen aus ihnen hergestellt werden.

Polyoxadiazole werden in verschiedenen Lösungsmitteln synthetisiert. Ein bekanntes Beispiel ist die Synthese in Oleum, rauchender Schwefelsäure, als Lösungsmittel. Oleum stellt eine sehr toxische und korrosive Syntheseumgebung dar. Nach dem Ende der Synthesereaktion ist eine exzessive Neutralisierung des Mediums erforderlich. Die Synthese von Polyoxadiazolen in Oleum ist beispielsweise in DD 292 919 A5 und DE 24 08 426 C2 beschrieben worden.

Durch Iwakura et al. (Y. Iwakura, K. Uno, S. Hara, J. Polym. Sci.: Part A, 1965, 3, Seiten 45 - 54) war erstmals ein Verfahren zur Produktion eines Polyoxadiazols basierend auf der Reaktion eines Hydrazinsulfats mit Dicarboxylsäure in Polyphosphorsäure (polyphosphoric acid, "PPA") aufgezeigt worden. Dennoch blieben die Korrelationen zwischen den Eigenschaften der erzeugten Polyoxadiazole mit verschiedenen Syntheseparametern lange Zeit unklar und sind teilweise auch jetzt noch nicht eingehend studiert und verstanden worden.

In RU 2263685 ist ein Verfahren zur Herstellung von Poly(1,3,4-oxadiazol) mit Molekularmassen zwischen 60.000 und 450.000 Da (Dalton, entspricht g/Mol) offenbart. Das Verfahren beinhaltet eine Polykondensationsreaktion von Dicarboxylsäure mit Hydrazinderivaten oder mit Dicarboxylsäure-Dihydrazid bei einer Temperatur von 190°C bis 220°C, die in einem Lösungsmittel in Anwesenheit von Triphenylphosphit für eine Dauer von 3 bis 7 Stunden ausgeführt wird.

In JP 63118331 AA ist ein Verfahren zur Herstellung eines Polyoxadiazols mit hoher Effizienz offenbart, wobei eine Dicarboxylsäure und ein Hydrazinsulfat kondensiert werden unter Benutzung einer Mischung aus Phosphorpentoxid und Methansulfonsäure als Kondensationsmittel.

Polyphosphorsäure entsteht bei der Reaktion von Phosphorpentoxid mit Wasser und weist die generelle Strukturformel 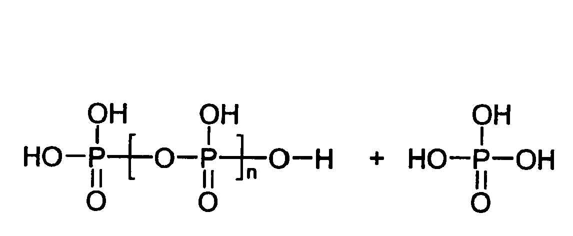 auf, worin der rechte Term Phosphorsäure (PA), der linke eine Polyphosphorsäure (PPA) und n eine ganze Zahl ist.

PPA ist ein gutes Lösungsmittel für viele organische Verbindungen. Es ist eines der effektivsten Reagenzien zur Ausführung von Azylierung, Alkylierung, Zyklisierung und für säurekatalysierte Reaktionen. PPA hat sich auch in der Polymersynthese als nützlich erwiesen. Trotz der großen Zahl der Publikationen auf dem Gebiet der Syntheseapplikationen von PPA sind viele Aspekte bezüglich des Effekts von PPA als Säurekatylist unbekannt. Die meisten vorgeschlagenen Mechanismen, die dieses Lösungsmittel involvieren, sind nicht durch experimentelle Daten gestützt.

Krongauz et al. (Y. S. Krongauz, V. V. Korshak, Z. O. Virpsha, A. P. Tranikowa, V. Sheina, B. V. Lokshin, Vysokomol soyed 1970; A12:135-139) stellten die Hypothese auf, dass die Addition von Phosphorpentoxid (P₂O₅) zum Reaktionsmedium bei einer Polymerisation in PPA zu einem höheren Molekulargewicht der synthetisierten Polyoxadiazole führt. In Anwesenheit von P₂O₅ war eine Viskosität des synthetisierten Polymers von 2,34 gefunden worden, in Abwesenheit von P₂O₅ eine Viskosität von 1,2. Es wurde daher geschlossen, dass die Zugabe von Salz das Molekulargewicht erhöht. Jedoch waren die Vergleichsversuche unter unterschiedlichen Reaktionsbedingungen bei unter anderem unterschiedlichen Temperaturen und Reaktionszeiten ausgeführt worden, so dass der Einfluss von P₂O₅ auf das Molekulargewicht der synthetisierten Polyoxadiazole durch diese Studie nicht eindeutig belegt ist.

Ein Verfahren zur Herstellung von sulfonierten Polyoxadiazolen über Polykondensation von Hydrazinsulfaten mit einer mehreren Dicarbonsäuren oder Derivaten davon in Polyphosphorsäure ist aus DE 10 2007 029 542.3 bekannt. Dieses Polymer dient zur Herstellung von Membranen für Brennstoffzellen.

Eine systematische Studie der Einflüsse verschiedener Syntheseparameter auf die Eigenschaften der synthetisierten Polyoxadiazole war durch Gomes et al. ausgeführt worden. Diese Studien waren publiziert worden in
- Gomes et al. (2001): D. Gomes, C.P. Borges, J.C. Pinto, Polymer 2001, 42, 851 - 865,
- Gomes (2002): D. Gomes, PhD Thesis, COPPE/UFRJ, Rio de Janeiro, Brasilien, 2002,
- Gomes et al. (2003): D. Gomes, S.P. Nunes, J.C. Pinto, C.P. Borges, Polymer 2003, 44, 3633 - 3639,
- Gomes et al. (2004): D. Gomes, C.P. Borges, J.C. Pinto, Polymer 2004, 45, 4997 - 5004 und
- Gomes et al. (2008): D. Gomes, J. Roeder, M. L. Ponce, S. P. Nunes, J. Power Sources 175 (2008), 49 - 59.

Darin war unter anderem das Molekulargewicht, der Anteil von Rest-Hydrazidgruppen und der Sulfonierungsgrad bei POD-Synthesen in PPA untersucht worden.

Auch der Einfluss des Gehalts an Anhydrid P₂O₅ auf die Synthese in PPA unter Konstanthaltung aller anderen Reaktionsvariablen (Temperatur, Zeit, Monomerkonzentration, molare Verdünnung) und Variation der Anteile von zugefügtem P₂O₅ zum Lösungsmedium wurden studiert (Gomes (2002)). Dabei wurde herausgefunden, dass die Zugabe von P₂O₅ zu einer Erhöhung der Viskosität des Reaktionsmediums führte, so dass das Reaktionsmedium nicht mehr in der Reaktionsvorrichtung gerührt werden konnte. Daher verschlechterte sich die Homogenisierung und die Reproduzierbarkeit der Ergebnisse. Alle Experimente wurden dreifach ausgeführt, um die Reproduzierbarkeit zu studieren.

In der Veröffentlichung Gomes et al. (2001) war gezeigt worden, dass durch Hinzufügung von Wasser zu PPA Polyoxadiazole mit höherer intrinsischer Viskosität erhalten wurden als ohne Hinzufügung von Wasser zu PPA. Zu diesem Zweck waren 7 g Wasser zu PPA hinzugefügt worden, was die zehnfache Menge des Wasser ist, die durch die Polymerisationsreaktion selbst erzeugt wird.

Einer der Faktoren, die die Reproduzierbarkeit der Synthese von Polyoxadiazolen beeinflusst, ist eine schlechte Vermischung auf mikroskopischer Ebene ("Micromixing"), verursacht durch die hohe Viskosität des Reaktionsmediums während der Polymerisation. Die hohe Viskosität des Reaktionsmediums kann signifikante Fluktuationen der lokalen Monomerzusammensetzungen verursachen, was zu einer Verkürzung der Polymerkettenlänge führt.

Es war vorgeschlagen worden, dass die Homogenisierung durch Addition eines inerten Lösungsmittels in das Reaktionsmedium verbessert werden könnte, so dass die Eigenschaften der synthetisierten Polyoxadiazole bei ähnlichen Reaktionsbedingungen mit höherer Reproduzierbarkeit erreicht werden könnten. Es wurde jedoch gefunden (Gomes et al. (2001), Gomes et al. (2004)), dass die Zugabe von kleinen Mengen von NMP (N-Methyl-2-Pyrrolidon) und DMSO (Dimethylsulfoxid) zu PPA nicht zu einer Verbesserung der Vermischungsbedingungen führt.

Die Addition von großen Mengen von Lösungsmitteln in PPA führte schließlich zu einer Reduktion der Viskosität der Lösung. In diesem letzteren Fall wurde jedoch die Polymerisationsrate stark reduziert, da die Reaktion durch PPA katalysiert ist. Zwar mag auch die Addition von kleinen Mengen Wasser in das Reaktionsmedium dazu beitragen, die PPA-Viskosität zu reduzieren, jedoch kann auch Wasser die Kondensationsreaktion stören und die Eigenschaften der synthetisierten Polyoxadiazole verändern.

In weiteren Studien (Gomes et al. (2004), Gomes et al. (2008)) wurden optimierte experimentelle Bedingungen zur reproduzierbaren Herstellung von Polyoxadiazol-Proben mit hohen Molekulargewichten, bis zu 470.000 g/Mol identifiziert, wobei Polyoxadiazole in PPA erzeugt wurden, die eine hohe Löslichkeit in organischen Lösungsmitteln und niedrige Restanteile von Hydrazidgruppen aufwiesen.

Die nach dem Stand der Technik hergestellten Polyoxadiazol-Polymere weisen eine Elastizität von in der Regel etwa 4.000 MPa, Zugfestigkeiten bis zu 100 MPa und Bruchdehnungen von etwa 14% auf.

Ausgehend von diesem Stand der Technik liegt der vorliegenden Erfindung die Aufgabe zugrunde, ein Verfahren zur Herstellung eines Polyoxadiazol-Polymers sowie entsprechende Polyoxadiazol-Polymere mit höheren Molekulargewichten und verbesserten mechanischen Eigenschaften herzustellen, die weitere Verwendungsmöglichkeiten bieten.

Diese Aufgabe wird gelöst durch ein Verfahren zur Herstellung eines Polyoxadiazol-Polymers in einer einstufigen Polykondensationsreaktion eines Hydrazinsulfatsalzes mit Dicarboxylsäuren oder deren Derivaten in Polyphosphorsäure mit den folgenden Schritten:
- Erhitzen der Polyphosphorsäure auf eine Temperatur von wenigstens 160°C,
- Herstellen einer Lösung durch Vermischen des Hydrazinsulfatsalzes mit einer oder mehreren Dicarboxylsäuren oder deren Derivaten in der erhitzten Polyphosphorsäure,
- Erhitzen der Lösung unter einer Inertgas-Atmosphäre,
- Ausfällen des Polymers in einer Basislösung.

Die mit diesem Verfahren hergestellten Polyoxadiazol-Polymere weisen verbesserte mechanische Eigenschaften auf. Es werden Polyoxadiazol-Polymere mit sehr hohen Molekulargewichten bis zu 740.000 g/Mol erzeugt mit einer schmalen Molekulargewichtsverteilung. Das Verfahren bietet eine hohe quantitative Ausbeute, wobei die erzeugten Polyoxadiazol-Polymere ein hohes Elastizitätsmodul bis 4 GPa, hohe Zugfestigkeiten bis zu 200 MPa und Bruchdehnungen bis zu 60% aufweisen.

Dies wird erreicht, indem nunmehr die Ausgangsstoffe der Polymerisationsreaktionen nicht mehr, wie im Stand der Technik, in PPA bei Raumtemperatur zugegeben werden, sondern PPA zunächst auf wenigstens 160°C erhitzt wird. Es wurde überraschenderweise gefunden, dass diese Maßnahme, dazu führt, dass die katalytische Aktivität von PPA erhalten oder sogar gesteigert wird, während die Homogenität des Reaktionsmediums gehalten oder erhöht wird. Außerdem werden Effekte von schlechtem "Micromixing" im Polymerisationsmedium vermieden.

Die Steigerung der katalytischen Aktivität von PPA wird dabei der Erhöhung des Gehaltes an freier Phosphorsäure in der Polyphosphorsäure zugeschrieben.

Vorzugsweise wird das Polymer in der Basislösung neutralisiert.

Die Dicarboxylsäuren oder deren Derivate umfassen vorzugsweise aromatische und/oder heteroaromatische Dicarboxylsäuren oder deren Derivate. In einer vorteilhaften Ausbildung sind die Dicarboxylsäuren oder deren Derivate mit Dicarboxylsäure-Diestern gemischt.

Das Erhitzen der Polyphosphorsäure geschieht zur Erhöhung der Effizienz vorzugsweise für die Dauer von wenigstens einer Stunde. Das Erhitzen der Polyphosphorsäure geschieht vorteilhafterweise unter einer Gasatmosphäre, insbesondere einer Atmosphäre aus Stickstoff und/oder Argon mit oder ohne Wasseranteilen.

Das Erhitzen der Lösung geschieht vorzugsweise in einem Temperaturbereich von 160°C bis 200°C, insbesondere vorzugsweise in einem Temperaturbereich von 160°C bis 180°C. Die bevorzugte Dauer für das Erhitzen der Lösung ist 4 Stunden bis 24 Stunden, insbesondere bis zu 16 Stunden, insbesondere bevorzugt zwischen 6 und 8 Stunden.

Bei dem erfindungsgemäßen Verfahren weist das Polyoxadiazol vorzugsweise wenigstens einen konjugierten Ring umfassend zwei Stickstoffatome und ein Sauerstoffatom mit sich wiederholenden Einheiten der Struktur 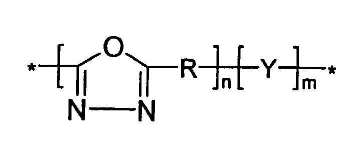 auf, wobei Y eine Gruppe mit der Struktur 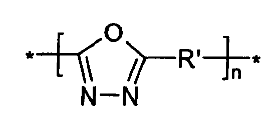 und/oder 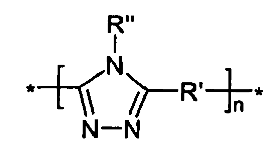 und/oder 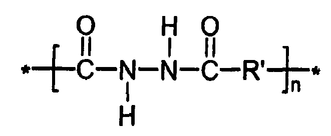 und/oder 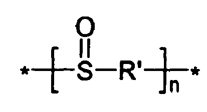 und/oder 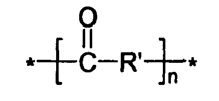 und/oder 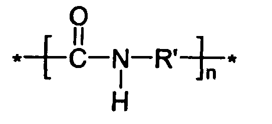 ist, wobei R und R' jeweils Gruppen mit 1 bis 40 Kohlenstoffatomen sind und R" ein Wasserstoffatom oder eine Gruppe mit 1 bis 40 Kohlenstoffatomen ist, wobei n und m natürliche ganze Zahlen sind, die jeweils größer als Null sind.

Die der Erfindung zugrunde liegende Aufgabe wird auch gelöst durch ein Polyoxadiazol-Polymer, insbesondere Homo- oder Copolymer, erhältlich in einem oben beschriebenen erfindungsgemäßen Verfahren. Vorzugsweise weist das erfindungsgemäße Polyoxadiazol-Polymer ein durchschnittliches Molekulargewicht von über 470.000 g/Mol auf. Die bevorzugte Molekulargewichtsverteilung M_{w}/Mₙ ist kleiner als 3, insbesondere kleiner als 2,4.

Für hervorragende mechanische Eigenschaften weist das Polyoxadiazol-Polymer vorzugsweise eine Zugfestigkeit von mehr als 120 MPa, insbesondere von mehr als 180 MPa auf. Die Bruchdehnung des erfindungsgemäßen Polyoxadiazol-Polymers ist vorzugsweise wenigstens 20%, insbesondere mehr als 50%.

Die der Erfindung zugrunde liegende Aufgabe wird auch gelöst durch die Verwendung eines erfindungsgemäßen Polyoxadiazol-Polymers wie oben beschrieben zur Herstellung einer Membran oder einer Faser bzw. als Leichtbau-Konstruktionswerkstoff oder für Beschichtungen.

Schließlich wird die der Erfindung zugrunde liegende Aufgabe gelöst durch eine Membran, eine Faser oder eine Beschichtung aus einem erfindungsgemäßen Polyoxadiazol-Polymer.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: die Molekulargewichtsverteilung von Polyoxadiazol-Polymeren des Standes der Technik für verschiedene Synthesedauern,
- Fig. 2: ein Zugfestigkeitsdiagramm sowie
- Fig. 3: ein NMR-Spektrum eines erfindungsgemäß behandelten PPA-Lösungsmittels.

### Beispiel 1

### Polyoxadiazol-Synthese

Es wurden POD-Polymere nach einem bekannten und nach dem erfindungsgemäßen Verfahren erzeugt und ihre mechanischen Eigenschaften verglichen.

Das durchschnittliche Molekulargewicht des synthetisierten Polymers wurde mittels SEC (Size Exclusion Chromatography) gemessen. Es wurde ein Viskotec-SEC-Apparat mit Eurogel-Trennsäulen SEC 10.000 und PSS Gram 100, 1.000 mit einer Größe von 8 x 300 mm eingesetzt. Die Vorrichtung wurde anhand von Polystyren-Standards von Merck kalibriert, deren gewichtsgemittelte Molekulargewichte zwischen 309 und 944.000 g/Mol betrugen. Als Trägerflüssigkeit wurde eine Lösung aus 0,05 M Lithiumbromid in Dimethylacetamid (DMAc) verwendet.

Zur Herstellung von homogenen Filmen bzw. Membranen wurde eine Lösung von Polyoxadiazol-Polymeren mit einer Konzentration von 4 Gew.% in Dimethylsulfoxid (DMSO) vorbereitet. Nach dem Ziehen der Membranen wurde das DMSO in einem Vakuumofen bei 60°C 24 Stunden lang verdampft.

Zur Entfernung von verbleibenden Restlösungsmitteln wurden die Membranen 48 Stunden lang in ein Wasserbad bei 50°C eingetaucht und anschließend in einem Vakuumofen bei 60°C 24 Stunden lang getrocknet. Die Dicke der so erhaltenen Membranen betrug etwa 50 µm.

Zugfestigkeitstests zur Messung der mechanischen Eigenschaften der erhaltenen Membranen wurden auf einem Zwick-Roell-Apparat nach ASTN D882-00 ausgeführt. Die Dehnungsgeschwindigkeit betrug 5 mm/min bei Raumtemperatur. Es wurden die Bruchspannung, Dehnung beim Bruch und das Elastizitätsmodul (Young'sches Modul) gemessen. Die angegebenen Werte entsprechen jeweils den Mittelwerten über 5 Proben.

### 1. Synthese nach einem bekannten Verfahren

In einer Synthese von Polyoxadiazol-Polymeren nach Gomes et al. (2001), (2004) und (2008) wurde zunächst PPA in einen Kolben gegeben und unter einer trockenen Stickstoffatmosphäre auf 100°C erhitzt. Dazu wurde Hydrazinsulfatsalz (HS, > 99%, Aldrich) gegeben und durch Rühren und weitere Wärmezuführ zum Reaktionsmedium homogenisiert. Nach Erreichen der Reaktionstemperatur wurde Dicarboxyldiazid-4,4'-Diphenylether (DPE, 99%, Aldrich) in den Kolben dazugegeben.

Das molare Verdünnungsverhältnis (PPA/HS) und die molare Monomerrate (HS/DPE) wurden konstant gehalten bei 10 und 1,2, respektive. DPE und HS reagierten 4 bis 6 Stunden lang. Danach wurde das Reaktionsmedium in Wasser gegossen, das 5% Gew./Vol. Natriumhydroxid (99%, VETEC) enthielt, um das Polymer auszufällen. Der pH-Wert dieser Polymersuspension wurde nach dem bekannten Verfahren (Gomes et al., (2004)) kontrolliert.

Die chemische Struktur des erzeugten POD-Polymers ist wie folgt: 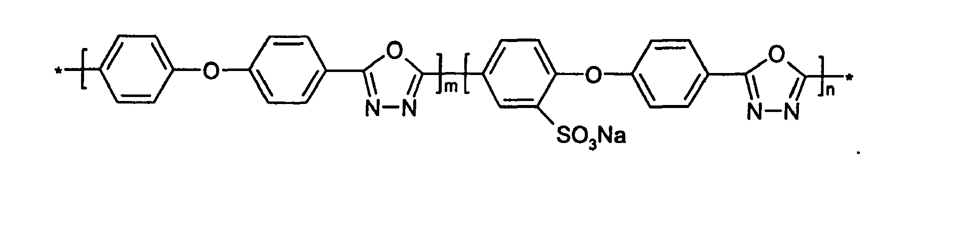 Mittels des bekannten Verfahrens wurden Polyoxadiazol-Polymere erhalten, die in den Lösungsmitteln NMP und DMSO löslich waren, mit mittleren Molekulargewichten, mittels SEC bestimmt, die bei einer Synthesedauer von 4 Stunden etwa 330.000 g/mol betrugen und bei einer Synthesedauer von 6 Stunden etwa 470.000 g/mol.

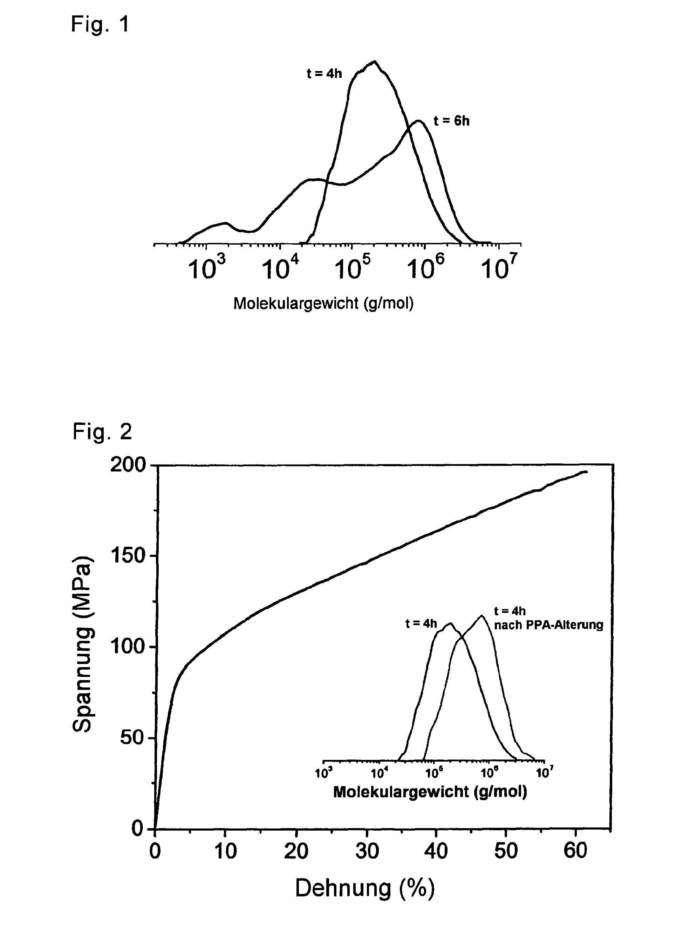

In Fig. 1 ist das SEC-Profil, normiert auf den Polystyren-Standard dargestellt. Bei einer Erhöhung der Synthesedauer von 4 Stunden auf 6 Stunden bildeten sich Polymere mit niedrigerem Molekulargewicht in der Größenordnung von 10³ g/Mol, resultierend aus der gleichzeitigen Degradierungs-Reaktion (vgl. Gomes et al. (2001) und Gomes et al. (2008)).

Obwohl das Polyoxadiazol bei einer Reaktionszeit von 6 Stunden ein höheres Molekulargewicht aufwies, waren seine mechanischen Eigenschaften nicht besser, da die Gewichtsverteilung wesentlich größer war (M_{w}/Mₙ = 8,1). Dieses Ergebnis ist in der nachfolgenden Tabelle 1 dargestellt.

**Tabelle 1**

| Probe | M_{w} (g/Mol) | M_{W}/Mₙ | Zugfestigkeit (MPa) |
|---|---|---|---|
| 4h | 328000 | 2.3 | 100 ± 5.04 |
| 6h | 471000 | 8.1 | 82.2 ± 9.14 |

### 2. Erfindungsgemäßes Verfahren

Zunächst wurde Polyphosphorsäure (PPA) in einen Kolben gegeben und unter einer trockenen Stickstoffatmosphäre drei Stunden lang bei einer Temperatur von 160°C erhitzt. Danach wurde Hydrazinsulfatsalz (HS) zur PPA hinzugegeben und durch Rühren und weiteres Erhitzen des Reaktionsmediums homogenisiert. Nach dem Lösen des HS wurde DPE in den Kolben hinzugegeben.

Das molare Verdünnungsverhältnis (PPA/HS) und das molare Monomerverhältnis (HS/DPE) wurden konstant gehalten bei 10 und 1,2, respektive. Die Reaktion von DPE und HS wurde vier Stunden lang durchgeführt. Danach wurde das Reaktionsmedium in Wasser geschüttet, das 5 % Gew./Vol. von Natriumhydroxid (99% VETEC) enthielt, um das Polymer aufzustellen. Der pH-Wert dieser Polymersuspension wurde, wie zuvor, kontrolliert.

Nach diesem Verfahren wurde ein Polyoxadiazol-Polymer erhalten, das in den Lösungsmitteln NMP und DMSO löslich war und ein mittleres Molekulargewicht, bestimmt nach SEC, von 747.000 g/Mol aufwies. Das Spannungs-Dehnungsdiagramm des Polymerfilms ist in Fig. 2 dargestellt. Das Insert zeigt das SEC-Profil, normiert auf den Polystyren-Standard.

In Tabelle 2 ist dargestellt, dass die mechanischen Eigenschaften, insbesondere die Reißfestigkeit und die Bruchdehnung gegenüber dem nach den bekannten Verfahren erhaltenen Polyoxadiazol-Polymer wesentlich verbessert sind. Bei gleichem Elastizitätsmodul von etwa 4.000 MPa innerhalb der Messfehler ist das mittlere Molekulargewicht mehr als verdoppelt. Die Breite der Verteilung der Molekulargewichte des Polymers leicht reduziert, die Reißfestigkeit beinahe verdoppelt und die Bruchdehnung vervierfacht.

**Tabelle 2**

| Probe | M_{W} (g/Mol) | M_{W}/Mₙ | Elastizitäts-modul (MPa) | Zugfestig keit (MPa) | Bruchdehnung (%) |
|---|---|---|---|---|---|
| 4h | 328000 | 2.3 | 4016 ± 194 | 100 ± 5.04 | 14 ± 3,20 |
| 4h nach PPA-Alterung | 747000 | 2.1 | 3802 ± 268 | 190 ± 7.82 | 57 ± 5.03 |

### Beispiel 2

### Untersuchung der Alterungsbehandlung der Polyphosphorsäure (PPA)

Unter Alterungsbehandlung wird im vorliegenden Zusammenhang die Erhitzung der PPA im Vorfeld der Polymersynthese verstanden.

Polyphosphorsäure wurde in einen Kolben gegeben und unter einer trockenen Stickstoffatmosphäre für verschiedene Zeitdauern zwischen 30 Minuten und 3 Stunden auf 160°C erhitzt. Der Anstieg des Gehalts an Phosphorsäure in der Polyphosphorsäure wurde durch ³¹P NMR-Spektroskopie analysiert.

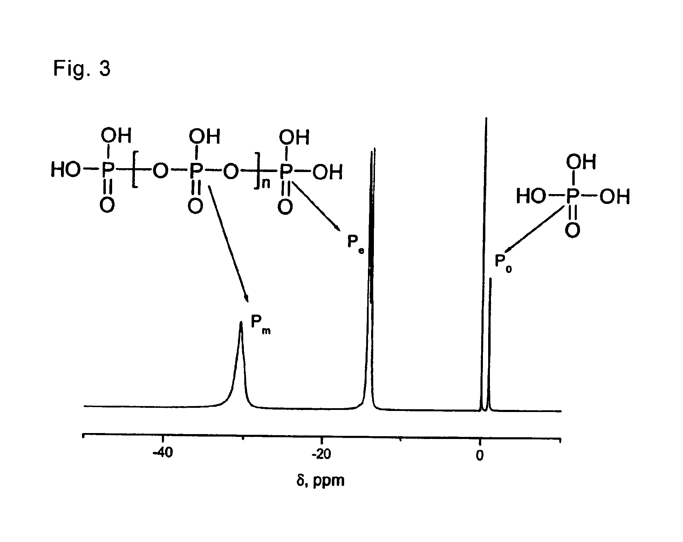

In Fig. 3 ist das ³¹P NMR-Spektrum von PPA nach einer Alterungsbehandlung von 3 Stunden dargestellt. Für die NMR-Analyse wurde ein Bruker DCX-300 Spektrometer verwendet, das bei einer Frequenz von 121,50 MHz betrieben wurde. Als Referenz wurde eine 85-prozentige Phosphorsäure verwendet.

Mit Pfeilen sind die jeweiligen Phosphor-Spezies bzw. deren Signallinien im Spektrogramm gekennzeichnet. Dabei bezeichnet Pₘ im NMR-Spektrum das Signal bei -30,54 der Mittelketten-Phosphoratome, die in der Mitte einer PPA-Kette angeordnet sind, Pₑ die Spektrogramm-Linie bei -13,99, die ein Phosphoratom am Ende einer PPA-Kette aufweist (Endkettenphosphor) und P₀ bei 0,966 die Linie, die das Phosphoratom in Phosphorsäure (PA, H₃PO₄) aufweist, neben der Linie des freien Phosphors bei 0.

In Tabelle 3 sind die relativen Mengen der drei Phosphor-Spezies vor und nach der Alterungsbehandlung von PPA angegeben, wobei jeweils über die individuellen P₀, Pₑ und Pₘ-Linien integriert wurde. Aus der Tabelle geht hervor, dass durch die Alterungsbehandlung von PPA der Gehalt von freier Phosphorsäure ansteigt und insbesondere die Linie, die mit dem Phosphor in der Mitte von PPA-Ketten korreliert, sinkt. Der Gehalt an freier Phosphorsäure steigt dabei um etwa 40% an, was genug ist, um die Katalyseaktivität von PPA zu steigern. Dies resultiert in synthetisierten Polyoxadiazol-Polymeren mit sehr hohen Molekulargewichten und sehr guten mechanischen Eigenschaften.

**Tabelle 3**

| Vorerhitzung der PPA (h) | P₀ | Pₑ | Pₘ | Gehalt freien Phosphors (P₀/P₀ + Pₑ + Pₘ) |
|---|---|---|---|---|
| 0 | 1.05 | 15.98 | 17.24 | 0.030 |
| 3 | 1.39 | 17.58 | 15.49 | 0.044 |

## Patentansprüche

1. Verfahren zur Herstellung eines Polyoxadiazol-Polymers in einer einstufigen Polykondensationsreaktion eines Hydrazinsulfatsalzes mit Dicarboxylsäuren oder deren Derivaten in Polyphosphorsäure mit den folgenden Schritten:
- Erhitzen der Polyphosphorsäure auf eine Temperatur von wenigstens 160°C,
- Herstellen einer Lösung durch Vermischen des Hydrazinsulfatsalzes mit einer oder mehreren Dicarboxylsäuren oder deren Derivaten in der erhitzten Polyphosphorsäure,
- Erhitzen der Lösung unter einer Inertgas-Atmosphäre,
- Ausfällen des Polymers in einer Basislösung.

2. Verfahren nach Anspruch 1, **dadurch gekennzeichnet, dass** das Polymer in der Basislösung neutralisiert wird.

3. Verfahren nach Anspruch 1 oder 2, **dadurch gekennzeichnet, dass** die Dicarboxylsäuren oder deren Derivate aromatische und/oder heteroaromatische Dicarboxylsäuren oder deren Derivate umfassen, wobei insbesondere die Dicarboxylsäuren oder deren Derivate mit Dicarboxylsäure-Diestern gemischt sind.

4. Verfahren nach einem der Ansprüche 1 bis 3, **dadurch gekennzeichnet, dass** das Erhitzen der Polyphosphorsäure für die Dauer von wenigstens einer Stunde geschieht.

5. Verfahren nach einem der Ansprüche 1 bis 4, **dadurch gekennzeichnet, dass** das Erhitzen der Polyphosphorsäure unter einer Gasatmosphäre, insbesondere einer Atmosphäre aus Stickstoff und/oder Argon mit oder ohne Wasseranteile, geschieht.

6. Verfahren nach einem der Ansprüche 1 bis 5, **dadurch gekennzeichnet, dass** das Erhitzen der Lösung in einem Temperaturbereich von 160°C bis 200°C, insbesondere in einem Temperaturbereich von 160°C bis 180°C, geschieht.

7. Verfahren nach einem der Ansprüche 1 bis 6, **dadurch gekennzeichnet, dass** das Erhitzen der Lösung für die Dauer von 4 Stunden bis 24 Stunden, insbesondere bis zu 16 Stunden, insbesondere zwischen 6 und 8 Stunden, geschieht.

8. Verfahren nach einem der Ansprüche 1 bis 7, **dadurch gekennzeichnet, dass** das Polyoxadiazol wenigstens einen konjugierten Ring umfassend zwei Stickstoffatome und ein Sauerstoffatom mit sich wiederholenden Einheiten der Struktur 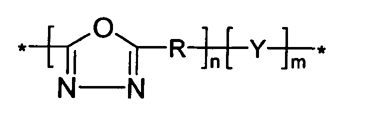 aufweist, wobei Y eine Gruppe mit der Struktur 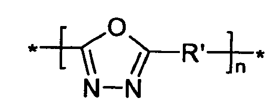 und/oder 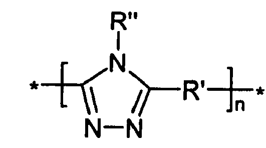 und/oder 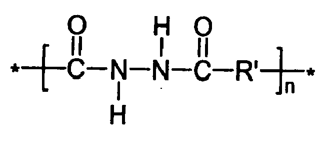 und/oder 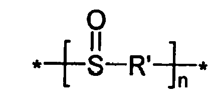 und/oder 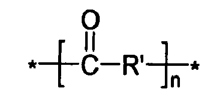 und/oder 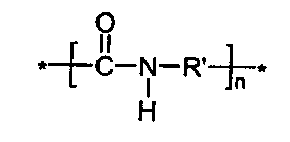 ist, wobei R und R' jeweils Gruppen mit 1 bis 40 Kohlenstoffatomen sind und R'' ein Wasserstoffatom oder eine Gruppe mit 1 bis 40 Kohlenstoffatomen ist, wobei n und m natürliche ganze Zahlen sind, die jeweils größer als Null sind.

9. Polyoxadiazol-Polymer, insbesondere Homo- oder Copolymer, erhältlich in einem Verfahren nach einem der Ansprüche 1 bis 8.

10. Polyoxadiazol-Polymer nach Anspruch 8 oder 9, **dadurch gekennzeichnet, dass** es ein durchschnittliches Molekulargewicht von über 470.000 g/Mol aufweist.

11. Polyoxadiazol-Polymer nach einem der Ansprüche 8 bis 10, **dadurch gekennzeichnet, dass** die Molekulargewichtsverteilung M_{w}/Mₙ kleiner als 3, insbesondere kleiner als 2,4 ist.

12. Polyoxadiazol-Polymer nach einem der Ansprüche 8 bis 11, **dadurch gekennzeichnet, dass** es eine Zugfestigkeit von mehr als 120 MPa, insbesondere von mehr als 180 MPa und/oder eine Bruchdehnung von wenigstens 20%, insbesondere mehr als 50%, aufweist.

13. Verwendung eines Polyoxadiazol-Polymers nach einem der Ansprüche 8 bis 12 zur Herstellung einer Membran oder einer Faser als Leichtbau-Konstruktionswerkstoff oder für Beschichtungen.

14. Membran aus einem Polyoxadiazol-Polymer nach einem der Ansprüche 8 bis 12.

15. Faser aus einem Polyoxadiazol-Polymer nach einem der Ansprüche 8 bis 12.
